# EUROPEAN PATENT SPECIFICATION

(11) **EP 4 230 817 B1**
(45) Date of publication and mention of the grant of the patent: **04.09.2024**
(21) Application number: 22157015.3
(22) Date of filing: 16.02.2022
(51) Int. Cl.: E04B 2/06, B33Y 80/00, E04B 2/02

(54) **A 3D PRINTED BUILDING ELEMENT**
3D-GEDRUCKTES BAUELEMENT
ÉLÉMENT DE CONSTRUCTION IMPRIMÉ EN 3D

(43) Date of publication of application: 23.08.2023
(73) Proprietor: Fantinelli S.r.l., 21054 Fagnano Olona (VA) (IT)
(72) Inventor: FANTINELLI, Davide, 21013 Gallarate (VA) (IT)
(74) Representative: Dragotti & Associati S.R.L.

(56) References cited:
- CN-A- 110 424 577
- GB-A- 2 592 843
- US-A- 3 430 404
- US-A1- 2016 130 810

## Description

The present invention relates to the field of 3D printed building element, in particular a 3D printed masonry structure for a building. The invention has been developed with particular reference to a 3D printed block of a masonry structure, and a method for producing a 3D printed masonry structure.

Document CN110424577 discloses a 3D printed building element comprising a 3D printed block comprising an upper wall, a front wall, a rear wall and two lateral walls, defining an inner space, with two internal blind ducts disposed in the inner space as well as protrusions on the upper wall.

A known method, as in CN109594777, to manufacturing a 3D printed building wall is to provide a large-scale 3D printer on site and direct printing from the bottom to the top a plurality of stackered layers. After the printing of a flat layer is completed, the next flat layer is printed there above.

This method, which allows to provide 3D printed wall with high load-bearing capacity, has his own drawbacks in particular in case of large building wall. It requires a reciprocating printing movement on a flat layer which can be very large, and it needs an extreme stability to achieve high-precision printing.

Since the size of the device is often limited due to factors such as printing accuracy, device stability, device transmission performance, and device manufacturability, the size of the printed building wall is often reduced.

Besides the logistic and set-up problems on site of these printers, they normally use materials which are not eco-friendly, such as, for example, a quick-setting mortar extruded layer by layer.

Another drawback of the know masonry structures made of 3D printed building elements is that the building element comprises a top and a bottom flat surfaces defining a plane parallel to the ground, so that only vertical and squared wall can be manufactured.

It is therefore a general object of the present invention to create a building element that is manufactured using the 3D printing process, that has a high load-bearing capacity, that allows to create curved or inclined masonry structure, and that is made of eco-friendly materials.

In view of this object the idea which has occurred to the Applicant is that of providing, according to the invention, a 3D printed building element comprising:
- a 3D printed block comprising an upper wall, a front wall, a rear wall and two lateral walls, defining an inner space, the lower portions of the walls defining an inner edge developing seamlessly to form a bottom edge surface;
- two internal ducts disposed in the inner space, each defining a first feedthrough opening provided on the upper wall, and an opposite second feedthrough opening facing the bottom edge surface;
- the building element further comprises two connecting elements, each inserted in a corresponding duct, so that a first portion of the connection element is exposed outside the first feedthrough opening provided on the upper wall and is suitable to be inserted in a second feedthrough opening facing the bottom edge surface of a duct of a further block superimposed to the block.

Further technical features and advantages of the present invention will become clearer from the description, given only by way of example, with reference to the accompanying figures, in which:
- Figure 1 is a schematic frontal view of a masonry structure according to the present invention;
- Figure 2 is an isometric view of the masonry structure of Figure 1;
- Figure 3 is a bottom view of a 3D printed block according to the present invention;
- Figure 4 is a sectional view along line IV-IV of Figure 3;
- Figure 5 is a sectional view along line V-V of Figure 3;
- Figure 6 is an isometric view of the connection step of two 3D printed blocks according to the present invention;
- Figure 7 is an isometric view of one of the embodiments of a masonry structure according to the present invention;
- Figure 8 is a top view of another one of the embodiments of a masonry structure according to the present invention; and
- Figure 9 is an isometric view of the embodiment of Figure 8.

It is to be understood that elements or technical features of one embodiment may be conveniently incorporated in other embodiments without further clarifications.

Reference will now be made in detail to the various embodiments of the invention. Each example is provided merely by way of illustration of the invention and is understood as not being a limitation thereof. For example, the technical features shown or described since they form part of an embodiment may be adopted in, or associated with, other embodiments in order to produce a further embodiment. It is understood that the present invention will be inclusive of these modifications and variants.

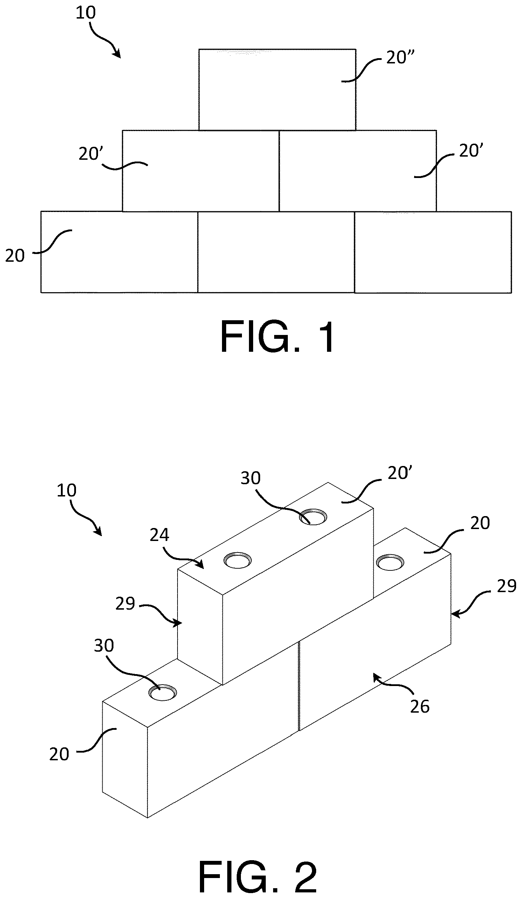

According to one of the preferred embodiments of the present invention, a masonry structure 10 comprises multiple blocks 20, 20', 20" disposed according to a predetermined configuration. The masonry structure 10 in Fig. 1, for example, comprises three layers each comprising a plurality of blocks 20, 20', 20" respectively, wherein the first layer lays on the ground, the second layer is stackered on the first layer and the third layer is stackered on the second layer.

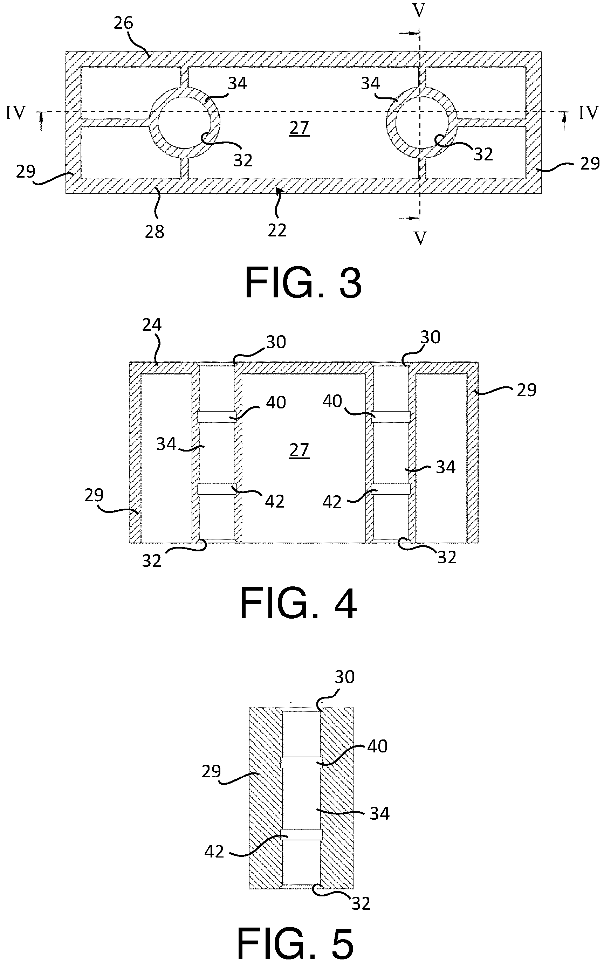

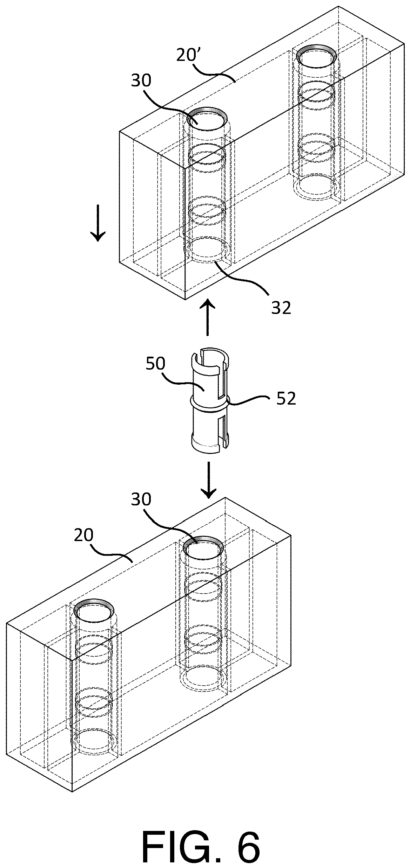

Each block 20, 20', 20", of the embodiment shown in Figures 3 to 6, has a rectangular shape in plan, with two pairs of congruent opposite sides, and with two sides longer than the other two sides. Each block 20 20, 20', 20" comprises an upper wall 24, a front wall 26, a rear wall 28 and two lateral walls 29, defining an inner space 27. The lower portions of the walls 24, 26, 28, 29 define an inner edge developing seamlessly to form a bottom edge surface 22.

According to the embodiment of Figures 1 and 2, the bottom edge surface 22 of the blocks 20 of the first layer lays on the ground, the bottom edge surface 22 of the blocks 20' of the second layer lays on the upper wall 24 of the blocks of the first layer, and the bottom edge surface 22 of the blocks 20" of the third layer lays on the upper wall 24 of the blocks of the second layer.

The front wall 26 and the rear wall 28 of each block 20, 20', 20" contribute to create, respectively, the front wall and the rear wall of the entire masonry structure 10, and they can comprise predetermined surface texture.

The lateral walls 29 of a first block 20, 20', 20" are faced to the lateral walls 29 of a second and a third blocks 20, 20', 20" disposed laterally adjacent to the first block 20, 20', 20" on the same layer.

The shape and the dimension of each block 20, 20', 20" shown in Figures 1 to 6 are given only as an example, and they can be modified without exit from the scope of protection of the present application. For example, a block 20, 20', 20" may have a square or trapezoidal or even triangular cross-section or shape in plan.

As clearly shown in Figures 3 to 5, each block 20, 20', 20" comprises two internal ducts 34. Each duct 34 defines a first feedthrough opening 30 provided on the upper wall 24, and an opposite second feedthrough opening 32 facing the bottom edge surface 22.

Each unit block further comprises two connecting elements 50, each inserted in a corresponding duct 34 of a block 20, 20', 20", so that a first portion 52 of the connection element 50 is exposed outside the first feedthrough opening 30 provided on the upper wall 24 and is suitable to be inserted in a second feedthrough opening 32 facing the bottom edge surface 22 of a duct 34 of a further block 20', 20". According to the embodiment shown in the figures, each duct 34 comprises two internal abutments 40, 42. The first internal abutment 40 can be provided in the upper portion of the duct 34 and the second internal abutment 42 can be provided in the lower portion of the duct 34.

Each internal abutment 40, 42 is suitable to block the insertion of the connecting element 50 inside the duct 34 and to allow the upper portion of the connecting element 50 to be exposed outside the first feedthrough opening 30, or to allow the lower portion of the connecting element 50 to be exposed outside the second feedthrough opening 30.

According to the embodiment shown in the figures, each connecting element 50 comprises a central abutment 52, an external diameter of the central abutment 52 being greater than an internal diameter of the duct 34.

According to this configuration, the connecting element 50 allow to firmly connect one block 20', 20" superimposed to two adjacent blocks 20, 20' and to provide to the entire masonry structure a very high load-bearing capacity.

According to a further embodiment, each connection element 50 can be filled with a reinforcing element, i.e. a metal frame, and/or material, i.e. concrete, in order to reinforce the overall structure.

Alternatively, each connection element 50 can be used to house electrical wires or to house hydraulic pipes.

According to a further embodiment of the present invention a plurality of blocks 20 may comprise two feedthrough openings 30 provided on the upper wall 24 thereof, a corresponding duct 34 and a bottom wall closing the inner space 27. This plurality of blocks 20 are suitable to be placed on the ground and to form a first layer of the masonry structure.

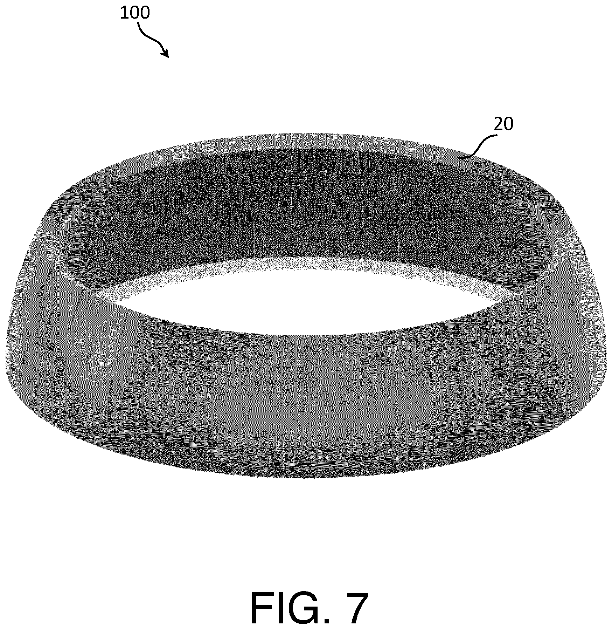

As stated above, each block 20, 20', 20" of the present invention may be manufactured with a different shape and a dimension so as to build a large number of different masonry structures. In the embodiment shown in Figure 7, a masonry structure 100 comprises a plurality of blocks 20, 20', 20" each having a non-polygonal cross-section so as to reproduce a spherical segment. The masonry structure of Figure 7 may be completed in order to create a dome.

In order to realize such a spherical segment, each block 20 has an annulus sector shape, and the bottom edge surface 22 of the first layer of blocks 20 define a plane parallel to the ground, while the upper wall 24 thereof define a plane tangent to the ground so as to create the curved masonry structure.

Due to the curvature of the masonry structure, the blocks 20, 20', 20" of each layer are keep together with the blocks 20, 20', 20" of the upper or lower stackered layer with the connecting elements 50.

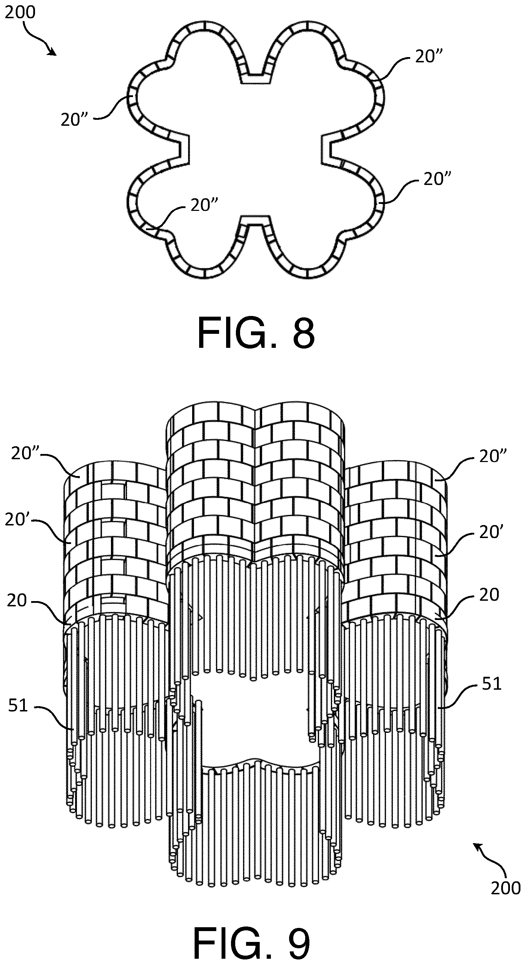

With particular reference to Figures 8 and 9, a masonry structure 200 according to a further embodiment of the present invention has a "four-leaf clover" shape in plan. The masonry structure comprises a plurality of stackered layers, each comprising a plurality of blocks 20, 20', 20". Each block 20, 20', 20" has a non-polygonal cross-section so as to reproduce a spherical segment. In order to realize such a spherical segment, each block 20 has an annulus sector shape, and the bottom edge surface 22 and upper wall 24 of each block 20, 20', 20" in each layer of blocks define two parallel planes parallel to the ground. Each block 20, 20', 20" may comprise a different annulus sector shape with respect to the annulus sector shape of another block 20, 20', 20" so that each layer of blocks shall reproduce the "four-leaf clover" shape in plan.

For example, each layer may further comprise a connecting block 21, with a further different shape in plan, which allows to connect each other the "leaves" of the masonry structure.

With particular reference to the embodiment shown in Figure 9, a plurality of blocks 20 may comprise feedthrough openings 32 facing the bottom edge surface 22 of the block 20 and connecting the corresponding duct 34. The plurality of blocks 20 may further comprises one or more anchoring elements 51, for example an elongated rod, connected to each block 20, for example each inserted in the corresponding duct 34 of the block 20.

This plurality of blocks 20 is suitable to be placed on the ground and to form a first layer of the masonry structure, and the anchoring elements 51 are suitable to be inserted in the ground in order to anchor the masonry structure to the ground and increase its stability.

According to one of the embodiments of the present invention, the 3D printed building element consists of a mixture of recycled plastic and wood from manufacturing waste. More in details, the material of the 3D printed building element comprises 50% in weight of recycled plastic and 50 % in weight of wood from manufacturing waste.

In use, a method for manufacturing a masonry structure of 3D printed building elements comprises the steps of:
- identifying multiple unit blocks according to the masonry structure 10;
- 3D printing all the blocks 20, 20', 20" and the ducts 34 of the masonry structure 10 according to the technical features above described;
- transporting the unit blocks to the building site, and
- manufacturing a masonry structure 10 of 3D printed building elements.

The method may further comprise the following steps:
- place a first layer of multiple blocks 20 on the ground,
- inserting a plurality of connection elements 50 into the feedthrough openings 32 provided on the upper wall 24 of each block 20 of the first layer,
- superimposing a second layer of blocks 20' on the first layer by inserting a first connection element 50 of a block 20 of the first layer in a feedthrough opening 32 provided on the bottom edge surface 22 of a first block 20' of the second layer, and inserting a second connector element 50 of the same block 20 of the first layer in a feedthrough opening 32 provided on the bottom edge surface 22 of a second block 20' of the second layer disposed adjacent to the first block 20' of the second layer.

## Claims

1. A 3D printed building element comprising:
- a 3D printed block (20) comprising an upper wall (24), a front wall (26), a rear wall (28) and two lateral walls (29), defining an inner space (27), the lower portions of the walls (24, 26, 28, 29) defining an inner edge developing seamlessly to form a bottom edge surface (22);
- two internal ducts (34) disposed in the inner space (27), each defining a first feedthrough opening (30) provided on the upper wall (24), and an opposite second feedthrough opening (32) facing the bottom edge surface (22);
the building element further comprises two connecting elements (50), each inserted in a corresponding duct (34) of the block (20), so that a first portion (52) of the connection element (50) is exposed outside the first feedthrough opening (30) provided on the upper wall (24) and is suitable to be inserted in a second feedthrough opening (32) facing the bottom edge surface (22) of a duct (34) of a further block (20) superimposed to the block (20).

2. A 3D printed building element according to claim 1, **characterised in that** each duct (34) comprises two internal abutments (40, 42), the first internal abutment (40) provided in the upper portion of the duct (34) and the second internal abutment (42) provided in the lower portion of the duct (34).

3. A 3D printed building element according to claim 2, **characterised in that** the connecting element (50) comprises a central abutment (52), an external diameter of the central abutment (52) being greater than an internal diameter of the duct (34).

4. A masonry structure comprising a plurality of 3D printed building elements according to claims 1 to 3, wherein it comprises
- a first layer of multiple blocks (20),
- a plurality of connection elements (50) inserted into the feedthrough openings (32) provided on the upper wall (24) of each block (20) of the first layer,
- a second layer of blocks (20) superimposed on the first layer, and wherein
- a first connection element (50) of a block (20) of the first layer is inserted in a feedthrough opening (32) provided on the bottom edge surface (22) of a first block (20') of the second layer, and a second connector element (50) of the same block (20) of the first layer in inserted in a feedthrough opening (32) provided on the bottom edge surface (22) of a second block (20') of the second layer disposed adjacent to the first block (20') of the second layer.

5. A masonry structure according to claim 5, **characterised in that** a connection element (50) is filled with a reinforcing element in order to reinforce the overall structure.

6. A masonry structure according to claim 5, **characterised in that** the reinforcing element is a metal frame and/or concrete.

7. A masonry structure according to claim 4, **characterised in that** it further comprises a plurality of anchoring elements (51) connected to a plurality of blocks (20) of the first layer of the masonry structure.

8. A method for manufacturing a masonry structure of 3D printed building elements according to claims 4 to 7, comprising the steps of:
- identifying multiple unit blocks according to the masonry structure (10),
- 3D printing all the blocks (20, 20', 20") and the ducts (34) of the masonry structure (10),
- transporting the unit blocks to the building site, and
- manufacturing a masonry structure 10 of 3D printed building elements.

9. The method according to claim 8, **characterised in that** it further comprises the steps of:
- place a first layer of multiple blocks (20) on the ground,
- inserting a plurality of connection elements (50) into the feedthrough openings (32) provided on the upper wall (24) of each block (20) of the first layer,
- superimposing a second layer of blocks (20)' on the first layer by inserting a first connection element (50) of a block (20) of the first layer in a feedthrough opening (32) provided on the bottom edge surface (22) of a first block (20') of the second layer, and inserting a second connector element (50) of the same block (20) of the first layer in a feedthrough opening (32) provided on the bottom edge surface (22) of a second block (20') of the second layer disposed adjacent to the first block (20') of the second layer.

## Patentansprüche

1. 3D-gedrucktes Bauelement, umfassend:
- einen 3D-gedruckten Block (20), der eine obere Wand (24), eine Vorderwand (26), eine Rückwand (28) und zwei Seitenwände (29) umfasst, die einen Innenraum (27) definieren, wobei die unteren Abschnitte der Wände (24, 26, 28, 29) eine Innenkante definieren, die sich nahtlos entwickelt, um eine untere Kantenfläche (22) zu bilden;
- zwei interne Kanäle (34), die in dem Innenraum (27) angeordnet sind und jeweils eine erste Durchführungsöffnung (30) definieren, die an der oberen Wand (24) bereitgestellt ist, und eine gegenüberliegende zweite Durchführungsöffnung (32), die der unteren Kantenfläche (22) zugewandt ist;
wobei das Bauelement ferner zwei Verbindungselemente (50) umfasst, die jeweils in einen entsprechenden Kanal (34) des Blocks (20) eingesetzt sind, sodass ein erster Abschnitt (52) des Verbindungselements (50) außerhalb der ersten Durchführungsöffnung (30), die an der oberen Wand (24) bereitgestellt ist, freiliegt und geeignet ist, in eine zweite Durchführungsöffnung (32) eingesetzt zu werden, die der unteren Kantenfläche (22) eines Kanals (34) eines weiteren Blocks (20), der dem Block (20) überlagert ist, zugewandt ist.

2. 3D-gedrucktes Bauelement nach Anspruch 1, **dadurch gekennzeichnet, dass** jeder Kanal (34) zwei innere Widerlager (40, 42) umfasst, wobei das erste innere Widerlager (40) im oberen Abschnitt des Kanals (34) und das zweite innere Widerlager (42) im unteren Abschnitt des Kanals (34) vorgesehen ist.

3. 3D-gedrucktes Bauelement nach Anspruch 2, **dadurch gekennzeichnet, dass** das Verbindungselement (50) ein zentrales Widerlager (52) umfasst, wobei ein Außendurchmesser des zentralen Widerlagers (52) größer als ein Innendurchmesser des Kanals (34) ist.

4. Mauerwerk, umfassend eine Vielzahl von 3D-gedruckten Bauelementen nach den Ansprüchen 1 bis 3, **dadurch gekennzeichnet, dass** es Folgendes umfasst:
- eine erste Schicht aus mehreren Blöcken (20),
- eine Vielzahl von Verbindungselementen (50), die in die Durchführungsöffnungen (32) eingesetzt sind, die an der oberen Wand (24) jedes Blocks (20) der ersten Schicht bereitgestellt sind,
- eine zweite Schicht von Blöcken (20), die der ersten Schicht überlagert ist, und wobei
- ein erstes Verbindungselement (50) eines Blocks (20) der ersten Schicht in eine auf der unteren Kantenfläche (22) eines ersten Blocks (20') der zweiten Schicht bereitgestellte Durchführungsöffnung (32) eingesetzt ist und ein zweites Verbindungselement (50) desselben Blocks (20) der ersten Schicht in eine auf der unteren Kantenfläche (22) eines zweiten Blocks (20') der zweiten Schicht bereitgestellte Durchführungsöffnung (32) eingesetzt ist, die benachbart zu dem ersten Block (20') der zweiten Schicht angeordnet ist.

5. Mauerwerk nach Anspruch 5, **dadurch gekennzeichnet, dass** ein Verbindungselement (50) mit einem Verstärkungselement gefüllt ist, um die Gesamtstruktur zu verstärken.

6. Mauerwerk nach Anspruch 5, **dadurch gekennzeichnet, dass** das Verstärkungselement ein Metallrahmen und/oder Beton ist.

7. Mauerwerk nach Anspruch 4, **dadurch gekennzeichnet, dass** es ferner eine Vielzahl von Verankerungselementen (51) umfasst, die mit einer Vielzahl von Blöcken (20) der ersten Schicht des Mauerwerks verbunden sind.

8. Verfahren zum Herstellen eines Mauerwerks aus 3D-gedruckten Bauelementen nach den Ansprüchen 4 bis 7, umfassend die folgenden Schritte
- Identifizieren mehrerer Einheitsblöcke nach dem Mauerwerk (10),
- 3D-Druck aller Blöcke (20, 20', 20") und der Kanäle (34) des Mauerwerks (10),
- Transport der Einheitsblöcke zur Baustelle und
- Herstellen eines Mauerwerks 10 aus 3D-gedruckten Bauelementen.

9. Verfahren nach Anspruch 8, **dadurch gekennzeichnet, dass** es ferner die folgenden Schritte umfasst:
- Platzieren einer erste Schicht aus mehreren Blöcken (20) auf den Boden,
- Einsetzen einer Vielzahl von Verbindungselementen (50) in die Durchführungsöffnungen (32), die an der oberen Wand (24) jedes Blocks (20) der ersten Schicht bereitgestellt sind,
- Überlagern einer zweiten Schicht von Blöcken (20)' auf der ersten Schicht durch Einsetzen eines ersten Verbindungselements (50) eines Blocks (20) der ersten Schicht in eine Durchführungsöffnung (32), die auf der unteren Kantenfläche (22) eines ersten Blocks (20') der zweiten Schicht bereitgestellt ist, und Einsetzen eines zweiten Verbinderelements (50) desselben Blocks (20) der ersten Schicht in eine Durchführungsöffnung (32), die auf der unteren Kantenfläche (22) eines zweiten Blocks (20') der zweiten Schicht bereitgestellt ist, der benachbart zu dem ersten Block (20') der zweiten Schicht angeordnet ist.

## Revendications

1. Élément de construction imprimé en 3D comprenant :
- un bloc imprimé en 3D (20) comprenant une paroi supérieure (24), une paroi avant (26), une paroi arrière (28) et deux parois latérales (29), définissant un espace intérieur (27), les parties inférieures des parois (24, 26, 28, 29) définissant un bord intérieur se développant de façon ininterrompue pour former une surface de bord de fond (22) ;
- deux conduits internes (34) disposés dans l'espace intérieur (27), chacun définissant une première ouverture de traversée (30) prévue sur la paroi supérieure (24), et une deuxième ouverture de traversée opposée (32) faisant face à la surface de bord de fond (22) ;
l'élément de construction comprend en outre deux éléments de connexion (50), chacun inséré dans un conduit correspondant (34) du bloc (20), de sorte qu'une première partie (52) de l'élément de connexion (50) soit exposée à l'extérieur de la première ouverture de traversée (30) prévue sur la paroi supérieure (24) et soit appropriée pour être insérée dans une deuxième ouverture de traversée (32) faisant face à la surface de bord de fond (22) d'un conduit (34) d'un autre bloc (20) superposé au bloc (20).

2. Élément de construction imprimé en 3D selon la revendication 1, **caractérisé en ce que** chaque conduit (34) comprend deux butées internes (40, 42), la première butée interne (40) prévue dans la partie supérieure du conduit (34) et la deuxième butée interne (42) prévue dans la partie inférieure du conduit (34).

3. Élément de construction imprimé en 3D selon la revendication 2, **caractérisé en ce que** l'élément de connexion (50) comprend une butée centrale (52), un diamètre extérieur de la butée centrale (52) étant supérieur à un diamètre intérieur du conduit (34).

4. Structure de maçonnerie comprenant une pluralité d'éléments de construction imprimés en 3D selon les revendications 1 à 3, dans laquelle elle comprend
- une première couche de blocs multiples (20),
- une pluralité d'éléments de connexion (50) insérés dans les ouvertures de traversée (32) prévues sur la paroi supérieure (24) de chaque bloc (20) de la première couche,
- une deuxième couche de blocs (20) superposée à la première couche, et dans laquelle
- un premier élément de connexion (50) d'un bloc (20) de la première couche est inséré dans une ouverture de traversée (32) prévue sur la surface de bord de fond (22) d'un premier bloc (20') de la deuxième couche, et un deuxième élément connecteur (50) du même bloc (20) de la première couche est inséré dans une ouverture de traversée (32) prévue sur la surface de bord de fond (22) d'un deuxième bloc (20') de la deuxième couche disposé adjacent au premier bloc (20') de la deuxième couche.

5. Structure de maçonnerie selon la revendication 5, **caractérisée en ce qu'**un élément de connexion (50) est rempli d'un élément de renfort afin de renforcer la structure globale.

6. Structure de maçonnerie selon la revendication 5, **caractérisée en ce que** l'élément de renfort est un cadre métallique et/ou du béton.

7. Structure de maçonnerie selon la revendication 4, **caractérisée en ce qu'**elle comprend en outre une pluralité d'éléments d'ancrage (51) reliés à une pluralité de blocs (20) de la première couche de la structure de maçonnerie.

8. Procédé pour la fabrication d'une structure de maçonnerie d'éléments de construction imprimés en 3D selon les revendications 4 à 7, comprenant les étapes consistant à :
- identifier de multiples blocs unitaires en fonction de la structure de maçonnerie (10),
- imprimer en 3D tous les blocs (20, 20', 20") et les conduits (34) de la structure de maçonnerie (10),
- transporter les blocs unitaires sur le chantier, et
- fabriquer une structure de maçonnerie 10 d'éléments de construction imprimés en 3D.

9. Procédé selon la revendication 8, **caractérisé en ce qu'**il comprend en outre les étapes consistant à :
- poser une première couche de blocs multiples (20) sur le sol,
- insérer une pluralité d'éléments de connexion (50) dans les ouvertures de traversée (32) prévues sur la paroi supérieure (24) de chaque bloc (20) de la première couche,
- superposer une deuxième couche de blocs (20)' à la première couche en insérant un premier élément de connexion (50) d'un bloc (20) de la première couche dans une ouverture de traversée (32) prévue sur la surface de bord de fond (22) d'un premier bloc (20') de la deuxième couche, et insérer un deuxième élément connecteur (50) du même bloc (20) de la première couche dans une ouverture de traversée (32) prévue sur la surface de bord de fond (22) d'un deuxième bloc (20') de la deuxième couche disposé adjacent au premier bloc (20') de la deuxième couche.
